(19) Europäisches Patentamt
European Patent Office
Office européen des brevets

(11) EP 3 458 812 B1

## (12) EUROPÄISCHE PATENTSCHRIFT

(45) Veröffentlichungstag und Bekanntmachung des Hinweises auf die Patenterteilung:
**15.04.2020 Patentblatt 2020/16**

(21) Anmeldenummer: **17721147.1**

(22) Anmeldetag: **04.05.2017**

(51) Int Cl.:
*G01D 5/20* *(2006.01)* *G01D 5/244* *(2006.01)*

(86) Internationale Anmeldenummer:
**PCT/EP2017/060594**

(87) Internationale Veröffentlichungsnummer:
**WO 2017/198468 (23.11.2017 Gazette 2017/47)**

(54) **KIPPTOLERANTER LINEARWEGSENSOR**

TILT-TOLERANT LINEAR DISPLACEMENT SENSOR

CAPTEUR DE DÉPLACEMENT LINÉAIRE AUTORISANT LE BASCULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.05.2016 DE 102016208644**

(43) Veröffentlichungstag der Anmeldung:
**27.03.2019 Patentblatt 2019/13**

(73) Patentinhaber: **Robert Bosch GmbH**
**70442 Stuttgart (DE)**

(72) Erfinder:
• HERRMANN, Ingo
  71292 Friolzheim (DE)
• UTERMOEHLEN, Fabian
  71229 Leonberg (DE)

(56) Entgegenhaltungen:
EP-A1- 1 884 749     EP-A2- 0 936 439
DE-U1- 20 009 335    DE-U1-202004 019 489
US-A1- 2007 001 666

**Beschreibung**

Gebiet der Erfindung

Die Erfindung betrifft einen Linearwegsensor und ein Verfahren zum Bestimmen einer Relativposition mit diesem Linearwegsensor.

Stand der Technik

Bekannt sind Sensoren, die auf dem Wirbelstromprinzip basieren. Das Messsignal kann eine Frequenzänderung eines Schwingkreises sein, der eine Messspule umfasst, die über einer elektrisch leitfähigen Spur angeordnet ist. Die elektrisch leitfähige Spur ändert ihre Breite entlang eines Messwegs derart, dass sich eine Überdeckung der Messspule mit der elektrisch leitfähigen Spur entlang des Messwegs ändert. Die Messspule induziert in der leitfähigen Spur einen Wirbelstrom, der zu einer Induktivitätsänderung der Messspule führt.

Ein derartiger Sensor ist beispielsweise in der DE 10 2004 033 083 A1 oder der US2007/0001666 A1 dargestellt.

Eine toleranzrobuste Auslegung erfordert in der Regel den Einsatz von mehreren Messspulen und mehreren leitfähigen Spuren, die meistens eine identische Geometrie aufweisen, allerdings entlang des Umfangs des zu vermessenden Objektes versetzt angeordnet sind.

Neben der Bewegung in Messrichtung (wie etwa eine Drehung um eine x-Achse) kann es aufgrund von Toleranzen zu einer Verschiebung und zu Abstandsänderungen zwischen der Messspule und der elektrisch leitfähigen Spur (d.h. zu einer Bewegung in x-Richtung und z-Richtung) kommen. Des Weiteren ist eine Verkippung um die y-Achse möglich. Eine Verkippung und eine Abstandsänderung können für das Messverfahren besonders kritisch sein, da der Wirbelstromeffekt eine starke Abstandsabhängigkeit aufweist.

Offenbarung der Erfindung

Vorteile der Erfindung

Ausführungsformen der vorliegenden Erfindung können in vorteilhafter Weise ermöglichen, einen gegenüber Toleranzen robusten Wegsensor bereitzustellen, der einen besonders kleinen Bauraum aufweist.

Ideen zu Ausführungsformen der vorliegenden Erfindung können unter anderem als auf den nachfolgend beschriebenen Gedanken und Erkenntnissen beruhend angesehen werden.

Ein Aspekt der Erfindung betrifft einen Linearwegsensor. Ein Linearwegsensor kann ein Gerät sein, das dazu ausgeführt ist, einen relativen Abstand bzw. eine relative Position zweier Bauteile zu bestimmen. Beispielsweise kann der Linearwegsensor zur Messung der Einfedertiefe eines Zweirads bzw. einer Zweiradfedergabel verwendet werden. Auch kann beispielsweise der Weg eines Bremspedals oder die Gangposition eines Automatikgetriebes mit dem Linearwegsensor erfasst werden.

Gemäß einer Ausführungsform der Erfindung umfasst der Linearwegsensor ein Induktionselement, das auf einer ersten Seite eine elektrisch leitfähige Messspur aufweist, die entlang eines Messwegs verläuft; und ein Messsensorelement, das über der ersten Seite des Induktionselements angeordnet ist und das relativ zu dem Induktionselement entlang der Messspur beweglich ist, wobei das Messsensorelement eine Messspule umfasst, die über der Messspur angeordnet ist, und wobei sich eine Überdeckung der Messspule und der Messspur entlang des Messwegs derart ändert, dass eine Induktion der Messspule von einer Position der Messspule auf dem Messweg abhängig ist. Mit anderen Worten basiert der Linearwegsensor auf dem Wirbelstromprinzip. Die Induktivität der Messspule hängt von deren Position über der Messspur ab. Befindet sich die Messspule an einer Position über der Messspule, an der die Überdeckung der Messspule mit der Messspur größer ist, ist die Induktion höher als an einer Position, an der die Überdeckung niedriger ist. Die Messspule kann mit einer Kapazität zusammen einen Schwingkreis bilden, dessen Resonanzfrequenz somit von der Position der Messspule abhängt. Die Frequenz einer in der Messspule erregten Wechselspannung kann gemessen und daraus die Position abgeleitet werden.

Weiter umfasst der Linearsensor ein Korrektursensorelement, das mit dem Messsensorelement starr verbunden ist und das über einer zweiten Seite des Induktionselements angeordnet ist, wobei das Induktionselement auf der zweiten Seite wenigstens eine elektrisch leitfähige Korrekturspur aufweist, die entlang des Messwegs verläuft und das Korrektursensorelement wenigstens eine Korrekturspule aufweist, deren Überdeckung mit der Korrekturspur entlang des Messwegs konstant ist. Um eine Verkippung und/oder Verschiebung orthogonal zum Messweg des Induktionselements relativ zu dem Messsensorelement kompensieren zu können, weist der Linearsensor zusätzlich wenigstens eine Korrekturspule auf, die analog der Messspule über einer Korrekturspur angeordnet ist und auch mit dem Wirbelstromprinzip arbeitet. Im Gegensatz zu der Messspur weisen die Korrekturspule und die Korrekturspur jedoch eine gleichförmige Überdeckung entlang des Messwegs auf, so dass mit der wenigstens einen Korrekturspule wenigstens ein Abstand zwischen dem Korrektursensorelement und dem Induktionselement und somit zwischen dem Messsensorelement und dem Induktionselement bestimmt werden kann. Dieser Abstand kann in die Berechnung der Position des Messsensorelements relativ zum Induktionselement einfließen und diese Berechnung genauer machen.

Um Bauraum zu sparen, sind die Messspur und die wenigstens eine Korrekturspur auf unterschiedlichen, beispielsweise gegenüberliegenden, Seiten des Induktionselements angeordnet. Auch die wenigstens eine Korrekturspule kann sich auf einem eigenen, dem Messsensorelement gegenüberliegenden Korrektursensorelement befinden. Somit kann das Induktionselement zwischen dem Messsensorelement und dem Korrektursensorelement aufgenommen sein. Das Induktionselement ist zweiseitig strukturiert, so dass es schmaler sein kann, als wenn alle Spuren auf einer Seite angeordnet werden. Ein Einbau bei kleinerem Platzbedarf wird ermöglicht.

Beispielsweise kann der Linearwegsensor in das Innere eines Rohres verbaut werden, wobei das Messsensorelement und das Korrektursensorelement an gegenüberliegenden Innenseiten des Rohrs angebracht sind.

Insgesamt ist mit dem Linearwegsensor ein deutlich reduzierter Bauraum möglich, wobei eine Reduzierung der Breite um bis zu einem Faktor drei möglich ist, gegenüber einem Linearwegsensor mit nebeneinander angeordneten Spuren.

Da der Linearwegsensor toleranzrobust ist, wird eine kostengünstigere Aufbau- und Verbindungstechnik ermöglicht. Das einfache Messprinzip ist außerdem robust gegenüber elektromagnetischen Störungen.

Gemäß einer Ausführungsform der Erfindung umfasst das Induktionselement eine Leiterplatte, auf der auf der ersten Seite die Messspur und auf der zweiten Seite die wenigstens eine Korrekturspur als Leiterbahnen angeordnet sind. Das Induktionselement kann somit eine zweilagige Leiterplatte sein. Die Messspur und die eine oder mehr Korrekturspuren können als Metallschichten auf der Leiterplatte vorgesehen sein.

Gemäß einer Ausführungsform der Erfindung umfasst das Messsensorelement eine Leiterplatte, auf der die Messspule als planare Spule ausgeführt ist und/oder umfasst das Korrektursensorelement eine Leiterplatte, auf der die wenigstens eine Korrekturspule als planare Spule ausgeführt ist. Die Messspule und die eine, zwei oder mehr Korrekturspulen können in zwei Leiterplatten integriert sein, zwischen denen das Induktionselement verläuft. Die Messspule und oder/die wenigstens eine Korrekturspule können aus Leiterbahnen auf und/oder in einer Leiterplatte ausgeführt sein.

Gemäß einer Ausführungsform der Erfindung weist das Induktionselement zwei nebeneinander auf der zweiten Seite angeordnete Korrekturspuren auf und weist das Korrektursensorelement zwei nebeneinander angeordnete Korrekturspulen auf. Mit zwei oder mehr Korrekturspulen kann eine Verkippung des Induktionselementes relativ zum Korrektursensorelement ermittelt werden. Da das Korrektursensorelement mit dem Messsensorelement starr verbunden ist (d.h. die beiden Sensorelemente sind derart befestigt, dass sie gegenübereinander unbeweglich sind), kann aus dieser Verkippung auch eine Verkippung des Induktionselements gegenüber dem Messsensorelement ermittelt werden.

Gemäß einer Ausführungsform der Erfindung weisen die Korrekturspulen eine geringere Breite auf als die Messspule. Die Messspule und die Korrekturspule können gleichartig aufgebaut sein. Um jedoch Bauraum zu sparen, kann die wenigstens eine Korrekturspule schmaler sein als die Messspule. Unter Breite kann dabei eine Erstreckung in einer Richtung orthogonal zum Messweg in der Ebene des jeweiligen Messsensorelements bzw. Korrektursensorelements verstanden werden.

Gemäß einer Ausführungsform der Erfindung überlappen sich die Messspule, die Messspur, die wenigstens eine Korrekturspur und die wenigstens eine Korrekturspule bezüglich einer Richtung orthogonal zum Induktionselement. Insbesondere können die Messspur und die wenigstens eine Korrekturspur im gleichen Bereich des Induktionselements angeordnet sein und/oder sich überlappen.

Gemäß einer Ausführungsform der Erfindung verjüngt die Messspur sich entlang des Messwegs. Die Messspur kann zwei in Messrichtung aufeinander zu laufende Kanten aufweisen. Beispielsweise kann die Messspur dreieckig oder trapezförmig sein. Umgekehrt kann eine Korrekturspur zwei Kanten aufweisen, die parallel zur Messrichtung verlaufen. Beispielsweise kann eine Korrekturspur rechteckig sein.

Gemäß einer Ausführungsform der Erfindung weist die Messspur entlang des Messwegs eine Mindestbreite von 20% der Breite der Messspule auf. Mit einer Messspur, die auf dem gesamten Messweg wenigstens 20% der Messspule überdeckt, ergibt sich insbesondere bei einer Planarspule ein im Wesentlichen lineares Signal, das beispielsweise leichter ausgewertet werden kann.

Gemäß einer Ausführungsform der Erfindung weist die wenigstens eine Korrekturspur entlang des Messwegs eine konstante Breite auf. Beispielsweise kann die wenigstens eine Korrekturspur eine Breite von weniger als 50% der Breite einer Korrekturspule aufweisen. Damit kann sichergestellt werden, dass auch größere laterale Verschiebungen zu keiner wesentlichen Änderung der Signale der einen oder mehreren Korrekturspulen führen und im Wesentlichen nur eine Abstandsmessung erfolgt.

Gemäß einer Ausführungsform der Erfindung ist die wenigstens eine Korrekturspur versetzt zu einer Mitte der zugehörigen Korrekturspule angeordnet. Bei einer spiralförmig ausgeführten Planarspule tragen die äußeren Leiter stärker zur Induktivität bei als die inneren Leiter. Dies führt insbesondere bei einer als Planarspule ausgeführten Korrekturspule dazu, dass bei einer asymmetrisch angeordneten Korrekturspur eine Abstandsänderung zu größeren Induktivitätsänderungen und damit zu größeren Änderungen des Messsignals führt.

Ein weiterer Aspekt der Erfindung betrifft ein Verfahren zum Bestimmen einer Relativposition eines Messsensorelements und eines Induktionselements eines Linearwegsensors, so wie er obenstehend und untenstehend beschrieben ist. Beispielsweise kann das Verfahren von einer Steuerung ausgeführt werden, die auf dem Messsensorelement und/oder dem Korrektursensorelement angeordnet sein kann, beispielsweise auf den zugehörigen Leiterplatten zusätzlich zu der Messspule und der wenigstens einen Korrekturspule.

Gemäß einer Ausführungsform der Erfindung umfasst das Verfahren: Bestromen der Messspule und der wenigstens einen Korrekturspule mit jeweils einer Wechselspannung, deren Frequenz von einer Induktion der Messspule und der wenigstens einen Korrekturspule mit dem Induktionselement abhängig ist. Beispielsweise können die Messspule und die eine oder mehr Korrekturspulen dabei mit einer Wechselspannung beaufschlagt werden, die in der Messspur und der einen oder mehreren Korrekturspuren einen Wirbelstrom induziert, und die somit die Induktivität der jeweiligen Spule (Messspule oder Korrekturspule) ändert. Die Spulen können jeweils mit einem Schwingkreis verbunden sein, dessen Frequenz sich dann mit der jeweiligen Induktivität ändert. Diese Frequenz kann als Messsignal der jeweiligen Spule ausgewertet werden.

Gemäß einer Ausführungsform der Erfindung umfasst das Verfahren weiter: Messen wenigstens eines Korrekturfrequenzsignals der wenigstens einen Korrekturspule; Bestimmen wenigstens eines Abstands der wenigstens einen Korrekturspule von dem Induktionselement aus dem jeweiligen Korrekturfrequenzsignal; Messen eines Messfrequenzsignals der Messspule; Korrigieren des Messfrequenzsignals basierend auf dem bestimmten wenigstens einen Abstand der Korrekturspule; und Bestimmen der Relativposition aus dem korrigierten Messfrequenzsignal. Aus dem oder den Korrekturfrequenzsignalen können über eine Tabelle oder eine Formel die Abstände der jeweiligen Korrekturspule von der zugehörigen Spur berechnet werden. Aus dem Messfrequenzsignal kann, auch basierend auf einer Tabelle oder einer Formel, eine aktuelle Position des Linearwegsensors berechnet werden, wobei in diese Berechnung die zuvor bestimmten Abstände einfließen.

Ein Algorithmus, der das Verfahren ausführt und in der Steuerung als Computerprogramm implementiert sein kann, benötigt wenig Rechenleistung und kann mit einem Standard-Mikrocontroller abgebildet werden.

Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

Fig. 1A, 1B und 1C zeigen schematisch einen Linearwegsensor gemäß einer Ausführungsform der Erfindung, wobei Fig. 1A einen Querschnitt, Fig. 1B eine Draufsicht und Fig. 1C eine Unteransicht zeigt.

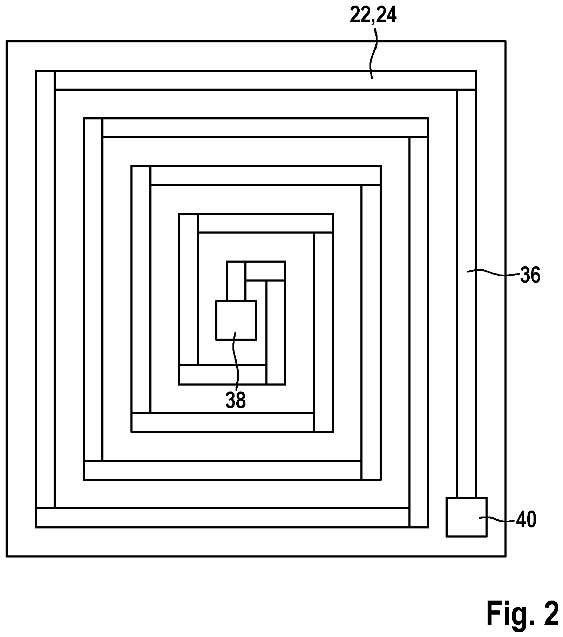

Fig. 2 zeigt eine schematische Draufsicht auf eine Planarspule.

Fig. 3A, 3B und 3C zeigen schematisch einen Linearwegsensor gemäß einer Ausführungsform der Erfindung, wobei Fig. 3A einen Querschnitt, Fig. 3B eine Draufsicht und Fig. 3C eine Unteransicht zeigt.

Fig. 4 zeigt ein Diagramm, das eine Abhängigkeit einer Frequenz von einem Abstand zwischen einem Induktionselement und einer Spule illustriert.

Fig. 5A zeigt schematisch einen Querschnitt durch den Linearwegsensor aus den Fig. 2A bis 2C in einer Normallage.

Fig. 5B zeigt ein Diagramm mit Messsignalen bei der in der Fig. 5A gezeigten Lage.

Fig. 6A zeigt schematisch einen Querschnitt durch den Linearwegsensor aus den Fig. 2A bis 2C in einer verschobenen Lage.

Fig. 6B zeigt ein Diagramm mit Messsignalen bei der in der Fig. 6A gezeigten Lage.

Fig. 7A zeigt schematisch einen Querschnitt durch den Linearwegsensor aus den Fig. 2A bis 2C in einer verkippten Lage.

Fig. 7B zeigt ein Diagramm mit Messsignalen bei der in der Fig. 7A gezeigten Lage.

Die Figuren sind lediglich schematisch und nicht maßstabsgetreu. Gleiche Bezugszeichen bezeichnen in den Figuren gleiche oder gleichwirkende Merkmale.

Ausführungsformen der Erfindung

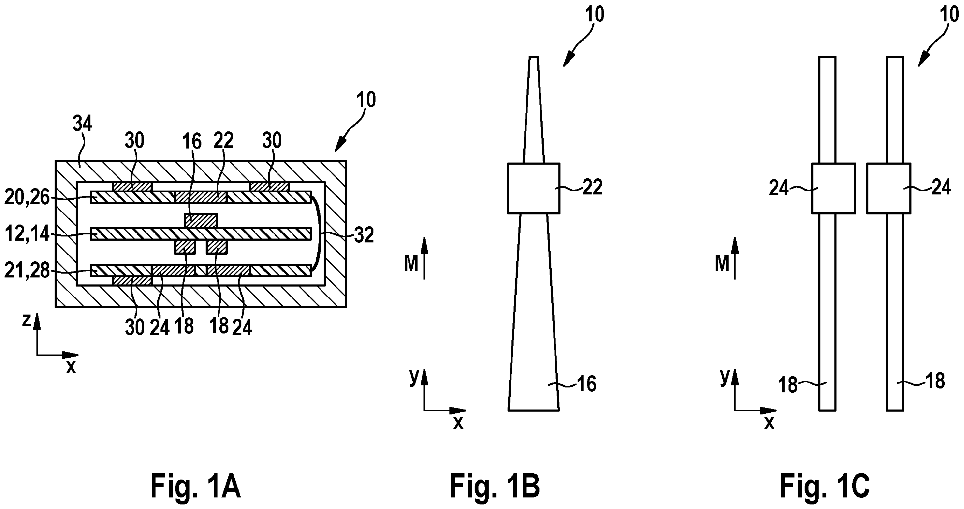

Fig. 1A zeigt einen schematischen Querschnitt, Fig. 1B eine schematische Draufsicht und Fig. 1C eine schematische Unteransicht eines Linearwegsensors 10. Wie in der Fig. 1A zu erkennen ist, umfasst der Linearwegsensor 10 ein Induktionselement 12 in der Form einer Leiterplatte 14, auf der auf einer Seite eine Messspur 16 und auf einer gegenüberliegenden Seite zwei Korrekturspuren 18 angebracht sind. Die Messspur 16 und die Korrekturspuren 18 können als Metallisierungsschichten auf einem Kunststoffsubstrat der Leiterplatte 14 ausgeführt sein.

Die Korrekturspuren 18 und die Messspur 16 sind auf unterschiedlichen Seiten des Induktionselements 12 angeordnet. Gegenüber der Messspur 16 ist auf einem Messsensorelement 20 eine Messspule 22 angeordnet. Weiter ist gegenüber jeder Korrekturspur 18 auf einem Korrektursensorelement 21 jeweils eine Korrekturspule 24 angeordnet. Die Messspule 22 und die Korrekturspulen 24 können als eine oder mehrere Leiterbahnen auf einem Kunststoffsubstrat einer Messsensor-Leiterplatte 26 bzw. einer Korrektursensor-Leiterplatte 28 ausgeführt sein. Die Messspule 22 und die Korrekturspulen 24 können Planarspulen sein und/oder können in mehreren Schichten der jeweiligen Leiterplatte 26, 28 angeordnet sein. Die Korrekturspulen 24 und die Messspulen 22, die eine identische Geometrie aufweisen können, können auf sich gegenüberliegenden Leiterplatten 26, 28 angeordnet sein.

Das Messsensorelement 20 bzw. die Leiterplatte 26 und/oder das Korrektursensorelement 21 bzw. die Leiterplatte 28 können Komponenten einer Steuerung/Auswerteelektronik 30 tragen, die die Spulen 22, 24 mit Wechselspannung versorgen kann und/oder die auch die Auswertungen zur Positionsbestimmung, wie weiter unten noch ausführlich beschrieben, durchführen kann. Die Auswerteelektronik 30 kann entweder auf die beiden Leiterplatten 26, 28 verteilt sein, sich nur auf einer der beiden oder sich auf einer dritten Leiterplatte befinden. Weiter können die beiden Leiterplatten 26, 28 elektrisch miteinander verbunden sein, beispielsweise über ein Flexkabel 32.

Das Messsensorelement 20 und das Korrektursensorelement 21 sind mechanisch starr miteinander verbunden und/oder können an gegenüberliegenden Innenseiten eines Rohrs 34 angebracht sein (das beispielsweise zu einer Motorradfedergabel gehört). Das Induktionselement 12 ist in der Richtung eines Messwerts M (siehe Fig. 1B und 1C) zwischen den beiden Sensorelementen 20, 21 beweglich.

In die Fig. 1A, 1B und 1C sind zueinander orthogonale Richtungen x, y, z eingezeichnet, wobei sich der Messweg M in Richtung y erstreckt, x eine Breitenrichtung und z eine Abstandsrichtung ist (bezüglich der Elemente 12, 20, 21 bzw. der Leiterplatten 14, 26, 28).

In der Fig. 1B ist lediglich die Messspur 16 und die Messspule 22 gezeigt, die Messspur 16 und die Messspule 22 sind in der Messrichtung zueinander beweglich, um eine Bestimmung der Position y zu ermöglichen. Die Überdeckung der Messspule 22 und der Messspur 16 ist von der Position y abhängig. Dabei weist die Messspur 16 zwei gerade, aber schräg zum Messweg M verlaufende Kanten auf, so dass die Überdeckung im Wesentlichen linear von der Position y abhängt. Die Messspur 16 kann wie ein Dreieck geformt sein, dessen Basis senkrecht zur Messrichtung orientiert ist. Die Basis kann dabei Abmessungen aufweisen, die in etwa der Breite der Messspule 22 (wenige mm bis wenige cm) entsprechen. Die Höhe des Dreiecks kann dem Messweg M (wenige cm bis einige zehn cm) entsprechen.

Das Induktionselement 12 und das Messsensorelement 20 können so zueinander orientiert sein, dass eine Mittelachse der Messspur 16 in jeder Position y mit der Mittelachse der Messspule 22 entlang der Messrichtung M zusammenfällt. Die Messspur 16 kann mittig zur Messspule 22 angeordnet sein.

Es ist auch möglich, dass die Messspur 16 als Trapez ausgebildet ist. Dies kann den Vorteil haben, dass sich ein lineareres Messsignal ergibt. Dies liegt daran, dass eine Überdeckung durch eine sehr schmale Spitze eines Dreieckes nahezu keinen Einfluss auf die Induktivität der Messspule 22 haben kann und sich damit nahezu keine Frequenzänderung ergeben kann. Die Messspur 16 kann eine gewisse Mindestbreite aufweisen, beispielsweise 20% der Breite der Messspule 22 (in x-Richtung).

Die Fig. 1C zeigt lediglich die Korrekturspuren 18 und die Messspulen 24, die sich auf der anderen Seite der Leiterplatte 14 befinden, wie die Komponenten 16 und 22. Die eine, zwei oder mehr Korrekturspuren 18 weisen eine Geometrie auf, die nicht mit dem Messweg M variiert, deren Überdeckung mit der zugehörigen Korrekturspur also unabhängig von der Position auf dem Messweg M ist.

Die Korrekturspuren 18 können Rechtecke sein, die in ihrer Breite schmaler als die zugehörigen Korrekturspulen 24 sind, beispielsweise eine Breite von 50% der Breite der zugehörigen Korrekturspule 24 aufweisen. Die Korrekturspulen 24 können in x-Richtung relativ zu den Korrekturspuren asymmetrisch orientiert sein. Mit anderen Worten kann eine Mittelachse einer Korrekturspur 18 versetzt zu einer Mittelachse der zugehörigen Korrekturspule 24 angeordnet sein. Mit dieser Anordnung kann sich eine bessere Korrektur gegenüber lateralen Verschiebungen (in x-Richtung) von Induktionselement 12 und Sensorelementen 20, 21 ergeben.

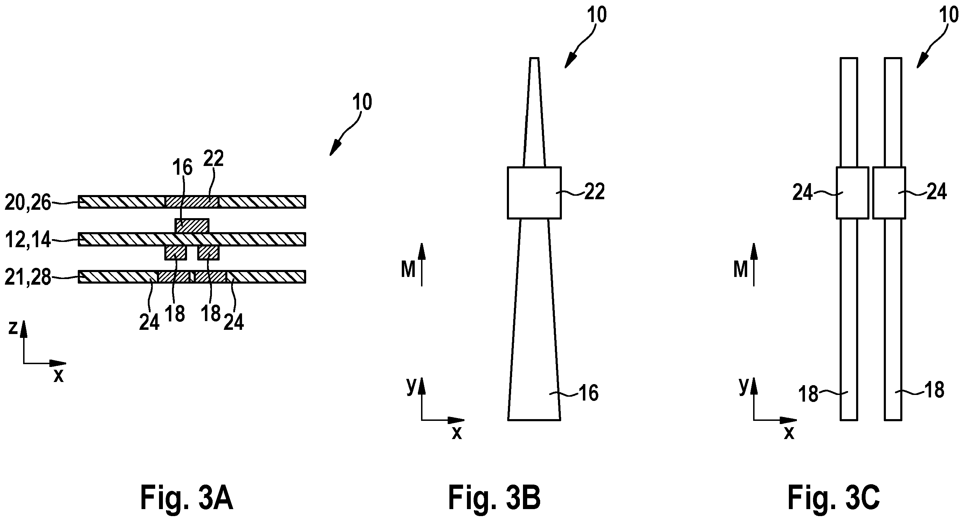

Dies kann mit der Fig. 3 verstanden werden, die eine Planarspule 22, 24 zeigt. Die Messspule 22 und jede der Korrekturspulen 24 kann wie die in der Fig. 3 gezeigte Planarspule geformt sein und/oder in einer oder mehr Lagen der Leiterplatte 26, 28 realisiert sein. Die Planarspule 22, 24 weist einen in einer Ebene (definiert durch die x- und y-Richtung) liegenden Leiter 36 auf, der von einem inneren Anschluss 38 spiralförmig zu einem äußeren Anschluss 40 verläuft.

Die oben erwähnte bessere Korrektur kann nun darin begründet sein, dass ein äußerer Abschnitt des Leiters 36 der Planarspule 22, 24 mehr zur Induktivität der Planarspule 22, 24 beitragen kann als ein innen liegender Abschnitt des Leiters 36 (bezogen auf den mittig liegenden Anschluss 38). Ein horizontales Verschieben einer asymmetrisch ausgerichteten Korrekturspur 18 kann also zu einer größeren Induktivitätsänderung führen, damit zu einer größeren Frequenzänderung und damit zu einer besseren Korrektur.

Die Fig. 3A bis 3C zeigen analog den Fig. 1A bis 1C eine weitere Ausführungsform eines Linearwegsensors 10, der eine geringere Breite aufweisen kann als der in den Fig. 1A bis 1C gezeigte Linearwegsensor 10. Dies ist dadurch realisiert, dass die Korrekturspulen 18 schmaler ausgeführt sind als die Messspule 22. Wie in der Fig. 3A zu erkennen ist, können die Korrekturspulen 18 in Breitenrichtung x aneinandergrenzen und/oder jeweils nur etwas mehr als 50% der Breite der Messspule 22 (wie etwa weniger als 60% der Breite der Messspule 22) aufweisen.

Das Messprinzip des Linearwegsensors basiert auf einem Wirbelstromeffekt. Die Steuerung 30 erzeugt in den Spulen 22, 24 eine Wechselspannung, die in den Spuren 16, 18 einen Wirbelstrom erzeugt, der eine Induktivitätsänderung der Spule 22, 24 zur Folge hat. Wird an die Spule 22, 24 eine Wechselspannung angelegt, entsteht ein elektromagnetisches Wechselfeld, welches in der Spur 16, 18 einen Wirbelstrom induziert. Dieser erzeugt ein zum ersten Feld entgegengesetztes Feld, was zu einer reduzierten Induktivität der Spule 22, 24 führt. Wird die Spule 22, 24 in einem elektrischen Schwingkreis verschaltet (der beispielsweise in die Steuerung 39 integriert ist), ändert sich dadurch die Resonanzfrequenz desselben gemäß

$$f_0 = \frac{1}{2\pi\sqrt{LC}}$$

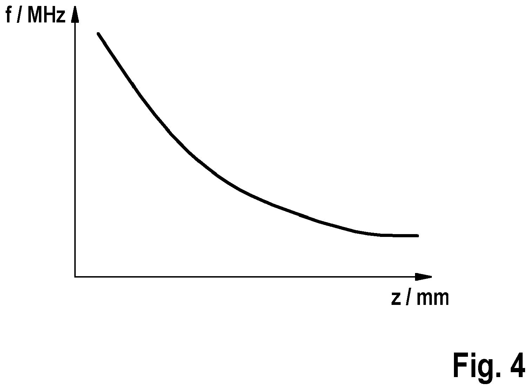

Je mehr die Messspule 22 von der Messspur 16 überdeckt wird und/oder je näher eine Spule 22, 24 der Spur 16, 18 kommt, desto größer wird die Frequenz des Schwingkreises. Hält man also den Abstand in z-Richtung zwischen Messspule 22 und Messspur 16 konstant und strukturiert die Messspur 16, so ergibt sich eine Frequenzänderung durch eine Positionsänderung der Messspule 22 entlang des Messwegs M. Eine Messung der Frequenz, beispielsweise durch Zählen oder ein Lock-In-Verfahren, erlaubt demnach einen Rückschluss auf die Position y. Die für den Schwingkreis verwendeten Kondensatoren können so gewählt werden, dass eine Frequenz im Bereich einiger zehn MHz erreicht wird. Kommt es zu einer Abstandsänderung der Messspule 22 von der Messspur 16, führt dies zu Messfehlern, die mit einem oder mehreren Paaren aus einer Korrekturspule 24 und einer Korrekturspur 18 korrigiert werden können. Beispielsweise zeigt die Fig. 4 eine Abhängigkeit der Resonanzfrequenz f eines Schwingkreises, bestehend aus einer Spule 22, 24 und einem Kondensator vom Abstand z zwischen der Spule 22, 24 und der zugehörigen Spur 16, 18.

Diese Abhängigkeit kann als Kalibrierungsdaten für jede Spule 22, 24 in der Steuerung 30 gespeichert werden. Diese können vor dem Einsatz des Linearwegsensors 10 bestimmt werden und/oder insbesondere beschreiben, wie sich die Frequenz f als Funktion des Abstandes z zwischen der Spule 22, 24 und der zugehörigen Spur 16, 18 verhält. Die Kalibrierungsdaten können beispielsweise im Speicher der Steuerung, beispielsweise eines ASICs oder eines Mikrocontrollers, abgelegt werden, entweder als Look-Up-Table (Datentabelle) oder in analytischer Form, d.h. als kodierte Funktion.

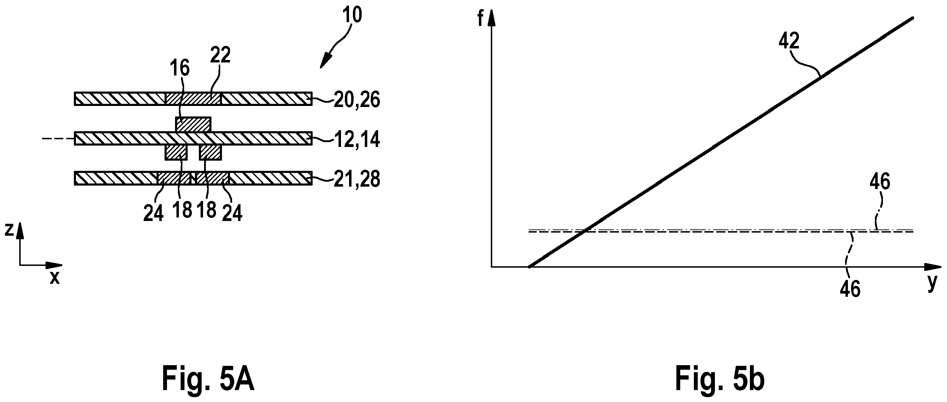

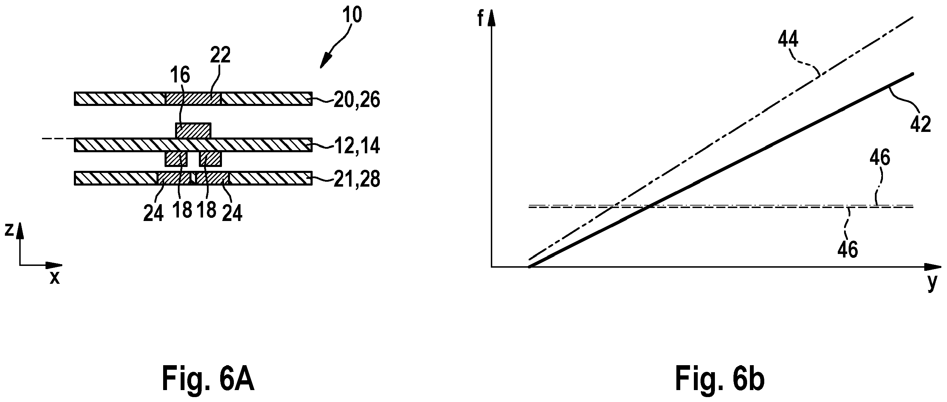

Die Korrektur des Messfrequenzsignals wird in Bezug auf die folgenden Figuren illustriert, wobei die Fig. 5A, 6A und 6C den Linearwegsensor 10 in verschiedenen Toleranzlagen zeigen. Die zugehörigen Fig. 6A, 6B und 6C sind Diagramme, die ein Messfrequenzsignal 42, ein korrigiertes Messfrequenzsignal 44 und Korrekturfrequenzsignale 46 in Abhängigkeit von der Messwegposition y zeigen.

Die Steuerung 30 kann die Korrekturfrequenzsignale 46 der Korrekturspulen 24 messen und dann mithilfe der Kalibrierungsdaten jeweils einen Abstand z der jeweiligen Korrekturspule 24 von dem Induktionselement 12 aus dem jeweiligen Korrekturfrequenzsignal 46 bestimmen. Aus auch in der Steuerung 30 abgelegten geometrischen Daten des Linearwegsensors 10 kann die Steuerung 30 dann eine Lage der Messspule 22 in Bezug auf das Induktionselement 12 aus den Abständen der Korrekturspulen 24 berechnen. Weiter kann die Steuerung 30 ein Messfrequenzsignal 42 der Messspule 22 messen und das Messfrequenzsignal 42 basierend auf den bestimmten Abständen der Korrekturspulen 24 korrigieren. Aus dem korrigierten Messfrequenzsignal 44 kann dann die Relativposition y des Induktionselements 12 und der Sensorelemente 20, 21 bestimmt werden.

Fig. 5A zeigt den Linearwegsensor 10 in einer Normallage, d.h., das Induktionselement 12 ist gegenüber einem initialen Zustand weder verschoben noch verkippt. Ohne Toleranzen verhält sich das Messfrequenzsignal 42 (Frequenz des Schwingkreises mit der Messspule) als Funktion der Messposition y linear. Da das Induktionselement 12 nicht verkippt ist, sind die Korrekturfrequenzsignale 46 nahezu identisch und es muss keine Korrektur vorgenommen werden. Die gestrichelte Linie links neben dem Induktionselement 12 bezeichnet die initiale Position des Induktionselements 12.

Die Fig. 6A zeigt den Linearwegsensor 10 in einer in Abstandsrichtung z verschobenen Lage. Verschiebt sich beispielsweise das Induktionselement 12 in Richtung des Korrektursensorelements 21, nimmt das Messfrequenzsignal 42 aufgrund des größeren Abstandes zwischen Messspule 22 und Messspur 16 ab. Gleichzeitig werden die Korrekturfrequenzsignale 46 beide um denselben Betrag größer. Ein korrigiertes Messfrequenzsignal 44 wird wie dargestellt basierend auf den hinterlegten Kalibrierungsdaten berechnet.

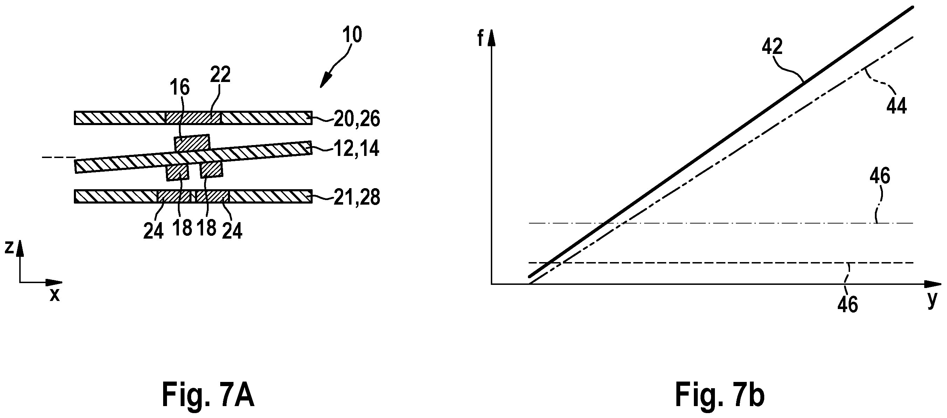

Die Fig. 7A zeigt den Linearwegsensor 10 in einer in um die y-Richtung verkippten Lage. Bleibt der mittlere Abstand des Induktionselements 12 gegenüber den Sensorelementen 20, 21 gleich, während es zu einer Verkippung kommt, wird das eine Korrekturfrequenzsignal 46 größer und das andere Korrekturfrequenzsignal 46 kleiner. (Je näher die Korrekturspur 18 an der Korrekturspule 24 ist, desto größer wird das Korrekturfrequenzsignal 46.)

Aufgrund des nichtlinearen Zusammenhanges zwischen Abstand und Frequenz (siehe Fig. 4), führt eine Verkippung beim Messfrequenzsignal 42 zu hohen Frequenzen. Wieder kann ein korrigiertes Messfrequenzsignal 44 basierend auf den Kalibrierungsdaten berechnet werden.

Weitere Lagen des Induktionselements ergeben sich aus Kombinationen der oben beschriebenen Fälle. Insbesondere können der Linearwegsensor 10 bzw. die Korrekturalgorithmen nicht nur statische Toleranzen (also beispielsweise eine statische Verkippung), sondern auch dynamische Toleranzen korrigieren.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

**Patentansprüche**

1. Linearwegsensor (10), umfassend:

   ein Induktionselement (12), das auf einer ersten Seite eine elektrisch leitfähige Messspur (16) aufweist, die entlang eines Messwegs (M) verläuft; und
   ein Messsensorelement (20), das über der ersten Seite des Induktionselements (12) angeordnet ist und das relativ zu dem Induktionselement (12) entlang des Messwegs (M) beweglich ist, wobei das Messsensorelement (20) eine Messspule (22) umfasst, die über der Messspur (16) angeordnet ist und wobei sich eine Überdeckung der Messspule (22) und der Messspur (16) entlang des Messwegs derart ändert, dass eine Induktion der Messspule (22) von einer Position (y) der Messspule (22) auf dem Messweg (M) abhängig ist;
   **gekennzeichnet durch**
   ein Korrektursensorelement (21), das mit dem Messsensorelement (20) starr verbunden ist und das über einer zweiten Seite des Induktionselements (12) angeordnet ist;
   wobei das Induktionselement (12) auf der zweiten Seite wenigstens eine elektrisch leitfähige Korrekturspur (18) aufweist, die entlang des Messwegs (M) verläuft; und
   wobei das Korrektursensorelement (21) wenigstens eine Korrekturspule (24) aufweist, deren Überdeckung mit der Korrekturspur (18) entlang des Messwegs (M) konstant ist.

2. Linearwegsensor (10) nach Anspruch 1, wobei das Induktionselement (12) eine Leiterplatte (14) umfasst, auf der auf der ersten Seite die Messspur (16) und auf der zweiten Seite die wenigstens eine Korrekturspur (18) als Leiterbahnen angeordnet sind.

3. Linearwegsensor (10) nach Anspruch 1 oder 2, wobei das Messsensorelement (20) eine Leiterplatte (26) umfasst, auf der die Messspule (22) als planare Spule ausgeführt ist; und/oder wobei das Korrektursensorelement (21) eine Leiterplatte (28) umfasst, auf der die wenigstens eine Korrekturspule (18) als planare Spule ausgeführt ist.

4. Linearwegsensor (10) nach einem der vorhergehenden Ansprüche,
   wobei das Induktionselement (12) zwei nebeneinander auf der zweiten Seite angeordnete Korrekturspuren (18) aufweist;
   wobei das Korrektursensorelement (21) zwei nebeneinander angeordnete Korrekturspulen (24) aufweist.

5. Linearwegsensor (10) nach einem der vorhergehenden Ansprüche,
   wobei die Korrekturspulen (24) eine geringere Breite aufweisen als die Messspule (22).

6. Linearwegsensor (10) nach einem der vorhergehenden Ansprüche,
   wobei die Messspule (22), die Messspur (16), die wenigstens eine Korrekturspur (18) und die wenigstens eine Korrekturspule (24) sich bei einer Blickrichtung (z) orthogonal zum Induktionselement (12) überlappen.

7. Linearwegsensor (10) nach einem der vorhergehenden Ansprüche,
   wobei die Messspur (16) sich entlang des Messwegs (M) verjüngt; und/oder
   wobei die Messspur (16) entlang des Messwegs (M) eine Mindestbreite von 20% der Breite der Messspule (22) aufweist.

8. Linearwegsensor (10) nach einem der vorhergehenden Ansprüche,
   wobei die wenigstens eine Korrekturspur (18) entlang des Messwegs (M) eine konstante Breite aufweist; und/oder
   wobei die wenigstens eine Korrekturspur (18) eine Breite von weniger als 50% der Breite einer Korrekturspule (24) aufweist.

9. Linearwegsensor (10) nach einem der vorhergehenden Ansprüche,
   wobei die wenigstens eine Korrekturspur (18) versetzt zu einer Mitte der zugehörigen Korrekturspule (24) angeordnet ist.

10. Verfahren zum Bestimmen einer Relativposition (y) eines Messsensorelements (20) und eines Induktionselements (12) eines Linearwegsensors (10) nach einem der vorhergehenden Ansprüche, das Verfahren umfassend:

    Bestromen der Messspule (22) und der wenigstens einen Korrekturspule (24) mit jeweils einer Wechselspannung, deren Frequenz von einer Induktion der Messspule (22) und der wenigstens einen Korrekturspule (24) mit dem Induktionselement (12) abhängig ist;
    Messen wenigstens eines Korrekturfrequenzsignals (46) der wenigstens einen Korrekturspule (24);

Bestimmen wenigstens eines Abstands der wenigstens einen Korrekturspule (24) von dem Induktionselement (12) aus dem jeweiligen Korrekturfrequenzsignal (46);

Messen eines Messfrequenzsignals (42) der Messspule (22);

Korrigieren des Messfrequenzsignals basierend auf dem bestimmten wenigstens einen Abstand der wenigstens einen Korrekturspule (24);

Bestimmen der Relativposition (y) aus dem korrigierten Messfrequenzsignal (44).

**Claims**

1. Linear displacement sensor (10), comprising:

   an induction element (12), which on a first side has an electrically conductive measuring track (16) which runs along a measurement path (M); and

   a measuring sensor element (20), which is arranged over the first side of the induction element (12) and is movable relative to the induction element (12) along the measurement path (M), wherein the measuring sensor element (20) comprises a measuring coil (22), which is arranged over the measuring track (16) and wherein an overlap between the measuring coil (22) and the measuring track (16) changes along the measurement path in such a manner that an induction of the measuring coil (22) is dependent on a position (y) of the measuring coil (22) on the measurement path (M);

   **characterized by**

   a correction sensor element (21) which is connected rigidly to the measuring sensor element (20) and is arranged over a second side of the induction element (12) ;

   wherein the induction element (12) on the second side has at least one electrically conductive measuring track (18) which runs along the measurement path (M); and

   wherein the correction sensor element (21) has at least one correction coil (24), the overlap of which with the correction track (18) is constant along the measurement path (M).

2. Linear displacement sensor (10) according to Claim 1,
   wherein the induction element (12) comprises a printed circuit board (14), on which on the first side the measuring track (16) and on the second side the at least one correction track (18) are arranged as conductor tracks.

3. Linear displacement sensor (10) according to Claim 1 or 2,
   wherein the measuring sensor element (20) comprises a printed circuit board (26) on which the measuring coil (22) is configured as a planar coil; and/or wherein the correction sensor element (21) comprises a printed circuit board (28), on which the at least one measuring coil (18) is configured as a planar coil.

4. Linear displacement sensor (10) according to any one of the preceding claims,
   wherein the induction element (12) has two correction tracks (18) arranged next to each other on the second side;
   wherein the correction sensor element (21) has two correction coils (24) arranged next to each other.

5. Linear displacement sensor (10) according to any one of the preceding claims,
   wherein the correction coils (24) have a lower width than the measuring coil (22).

6. Linear displacement sensor (10) according to any one of the preceding claims,
   wherein the measuring coil (22), the measuring track (16), the at least one correction track (18) and the at least one correction coil (24) overlap in a viewing direction (z) orthogonal to the induction element (12).

7. Linear displacement sensor (10) according to any one of the preceding claims,
   wherein the measuring track (16) tapers along the measurement path (M); and/or wherein the measurement track (16) has a minimum width along the measurement path (M) of 20% of the width of the measuring coil (22).

8. Linear displacement sensor (10) according to any one of the preceding claims,
   wherein the at least one correction track (18) has a constant width along the measurement path (M); and/or wherein the at least one correction track (18) has a width of less than 50% of the width of a correction coil (24) .

9. Linear displacement sensor (10) according to any one of the preceding claims,
   wherein the at least one correction track (18) is arranged offset relative to a center of the corresponding correction coil (24).

10. Method for determining a relative position (y) of a measuring sensor element (20) and an induction element (12) of a linear displacement sensor (10) according to any one of the preceding claims, said method comprising:

    energizing the measuring coil (22) and the at least one correction coil (24), in each case with an alternating voltage, the frequency of which is dependent on an induction of the measuring coil (22) and the at least one correction coil (24) with the induction element (12);

measuring at least one correction frequency signal (46) of the at least one correction coil (24);

determining at least one distance from the at least one correction coil (24) to the induction element (12) from the respective correction frequency signal (46);

measuring a measuring frequency signal (42) of the measuring coil (22);

correcting the measuring frequency signal based on the at least one determined distance of the at least one correction coil (24);

determining the relative position (y) from the corrected measuring frequency signal (44).

## Revendications

1. Capteur de course linéaire (10), comprenant :

un élément d'induction (12), qui possède sur un premier côté une piste de mesure (16) électriquement conductrice, laquelle suit un tracé le long d'une course de mesure (M) ;
et
un élément capteur de mesure (20), qui est disposé au-dessus du premier côté de l'élément d'induction (12) et qui est mobile le long de la course de mesure (M) par rapport à l'élément d'induction (12), l'élément capteur de mesure (20) comportant une bobine de mesure (22) qui est disposée au-dessus de la piste de mesure (16) et un recouvrement de la bobine de mesure (22) et de la piste de mesure (16) le long de la course de mesure se modifiant de telle sorte qu'une induction de la bobine de mesure (22) est dépendante d'une position (y) de la bobine de mesure (22) sur la course de mesure (M) ;
**caractérisé par**
un élément capteur de correction (21), qui est relié de manière rigide à l'élément capteur de mesure (20) et qui est disposé au-dessus d'un deuxième côté de l'élément d'induction (12) ;
l'élément d'induction (12) possédant sur le deuxième côté au moins une piste de correction (18) électriquement conductrice, laquelle suit un tracé le long de la course de mesure (M) ; et
l'élément capteur de correction (21) possédant au moins une bobine de correction (24) dont le recouvrement avec la piste de correction (18) le long de la course de mesure (M) est constant.

2. Capteur de course linéaire (10) selon la revendication 1,

l'élément d'induction (12) comportant un circuit imprimé (14) sur lequel sont disposées, sous la forme de pistes conductrices, la piste de mesure (16) sur le premier côté et l'au moins une piste de correction (18) sur le deuxième côté.

3. Capteur de course linéaire (10) selon la revendication 1 ou 2,

l'élément capteur de mesure (20) comportant un circuit imprimé (26), sur lequel la bobine de mesure (22) est réalisée sous la forme d'une bobine plane ;
et/ou l'élément capteur de correction (21) comportant un circuit imprimé (28), sur lequel l'au moins une bobine de correction (18) est réalisée sous la forme d'une bobine plane.

4. Capteur de course linéaire (10) selon l'une des revendications précédentes,

l'élément d'induction (12) possédant deux pistes de correction (18) disposées l'une à côté de l'autre sur le deuxième côté ;
l'élément capteur de correction (21) possédant deux bobines de correction (24) disposées l'une à côté de l'autre.

5. Capteur de course linéaire (10) selon l'une des revendications précédentes, les bobines de correction (24) présentant une largeur inférieure à celle de la bobine de mesure (22).

6. Capteur de course linéaire (10) selon l'une des revendications précédentes, la bobine de mesure (22), la piste de mesure (16), l'au moins une piste de correction (18) et l'au moins une bobine de correction (24) se chevauchant dans le cas d'une direction de visée (z) orthogonale par rapport à l'élément d'induction (12).

7. Capteur de course linéaire (10) selon l'une des revendications précédentes,

la piste de mesure (16) se rétrécissant le long de la course de mesure (M) ; et/ou
la piste de mesure (16) présentant le long de la course de mesure (M) une largeur minimale égale à 20 % de la largeur de la bobine de mesure (22).

8. Capteur de course linéaire (10) selon l'une des revendications précédentes,

l'au moins une piste de correction (18) présentant une largeur constante le long de la course de mesure (M) ; et/ou
l'au moins une piste de correction (18) présentant le long de la course de mesure (M) une largeur inférieure à 50 % de la largeur d'une bobine de correction (24).

9. Capteur de course linéaire (10) selon l'une des revendications précédentes,

l'au moins une piste de correction (18) étant disposée décalée par rapport à un centre de la bobine de correction (24) associée.

10. Procédé de détermination d'une position relative (y) d'un élément capteur de mesure (20) et d'un élément d'induction (12) d'un capteur de course linéaire (10) selon l'une des revendications précédentes, le procédé comprenant :

   alimentation électrique de la bobine de mesure (22) et l'au moins une bobine de correction (24) respectivement avec une tension alternative dont la fréquence est dépendante d'une induction de la bobine de mesure (22) et l'au moins une bobine de correction (24) avec l'élément d'induction (12) ;
   mesure d'au moins un signal de fréquence de correction (46) de l'au moins une bobine de correction (24) ;
   détermination d'au moins un écart entre l'au moins une bobine de correction (24) et l'élément d'induction (12) à partir du signal de fréquence de correction (46) respectif ;
   mesure d'un signal de fréquence de mesure (42) de la bobine de mesure (22) ;
   correction du signal de fréquence de mesure en se basant sur l'au moins un écart déterminé de l'au moins une bobine de correction (24) ;
   détermination de la position relative (y) à partir du signal de fréquence de mesure corrigé (44).

Fig. 1A

Fig. 1B

Fig. 1C

**Fig. 2**

Fig. 3A          Fig. 3B          Fig. 3C

EP 3 458 812 B1

Fig. 4

**Fig. 5A**

**Fig. 5b**

EP 3 458 812 B1

Fig. 6A

Fig. 6b

EP 3 458 812 B1

Fig. 7b

Fig. 7A

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004033083 A1
- US 20070001666 A1